# EUROPÄISCHE PATENTSCHRIFT

(11) **EP 2 114 200 B1**
(45) Veröffentlichungstag und Bekanntmachung des Hinweises auf die Patenterteilung: **06.01.2016**
(21) Anmeldenummer: 08715669.1
(22) Anmeldetag: 30.01.2008
(51) Int. Cl.: A47B 83/00, F16B 12/38

(54) **SCHALTPULT**
CONTROL DESK
PUPITRE DE COMMANDE

(30) Priorität: 02.02.2007 DE 102007006055
(43) Veröffentlichungstag der Anmeldung: 11.11.2009
(73) Patentinhaber: Rittal GmbH & Co. KG, 35745 Herborn (DE)
(72) Erfinder: WIRBELAUER, Jörg, 35781 Weilburg (DE); NEUHOF, Markus, 35630 Ehringshausen-Niederlemp (DE)
(74) Vertreter: Angerhausen, Christoph
(86) Internationale Anmeldenummer: PCT/EP2008/000715
(87) Internationale Veröffentlichungsnummer: WO 2008/092658

(56) Entgegenhaltungen:
- DE-A1- 4 005 137
- DE-U1-202004 016 010

## Beschreibung

Die Erfindung betrifft ein Schaltpult mit einem Schrankunterteil, einem Pultteil und einem Aufsatzteil. Das Pultteil ist auf dem Schrankunterteil angeordnet und steht über dessen Vorderseite vor. Das Aufsatzteil ist an dem Pultteil angeordnet, wobei der gegenüber dem Aufsatzteil vorstehende Teil des Pultteils mittels einer Blende verschließbar ist.

Aus der DE 40 05 137 C2 ist ein derartiger Schaltpult bekannt. Um dieses Schaltpult zusammenzubauen, wird das Pultteil mit seiner sich horizontal erstreckenden unteren Seite auf der sich horizontal erstreckenden oberen Seite des auf dem Boden stehenden Schrankunterteils aufgesetzt. Da das Pultteil mit einem Teil über die Vorderseite des Schrankunterteils vorsteht, kann das Pultteil in einem ersten Montageschritt nicht auf einfache Weise in der Montagestellung auf das Schrankunterteil gelegt und in einem weiteren anschließenden Montageschritt mittels Schraubverbindungen an diesem befestigt werden.

Aus der DE 20 2004 016 010 U1 eine Schnappbefestigung bekannt.

Um ein Herunterfallen des Pultteils vom Schrankunterteil aufgrund der ungünstigen Gewichtsverteilung durch das vorstehende Teil zu vermeiden, muss das Pultteil vielmehr so lange in der Montagestellung festgehalten werden, bis die Schraubverbindungen angebracht sind. Hierzu sind zumindest zwei Personen notwendig. Sobald das Pultteil am Schrankunterteil befestigt ist, kann wiederum durch eine einzige Person das Aufsetzteil auf das Pultteil aufgesetzt werden. Das Aufsetzteil verbleibt selbstständig in der Montageposition, bis entsprechende Schraubverbindungen angebracht sind, die das Aufsetzteil am Pultteil festlegen.

Es ist Aufgabe der Erfindung, ein Schaltpult der eingangs erwähnten Art zu schaffen, das aus dem Schrankunterteil, dem Pultteil und dem Aufsatzteil komplett von einer einzigen Person auf einfache Weise zusammengebaut werden kann.

Diese Aufgabe der Erfindung wird durch ein Schaltpult gemäß den Merkmalen des Anspruchs 1 gelöst. Vorteilhafte Weiterbildungen sind jeweils in den Unteransprüchen beschrieben.

Demgemäß ist zwischen der unteren Seite des Pultteils und der oberen Seite des Schrankunterteils eine Mehrzahl von Schnappverbindern wirksam, die zumindest am Randbereich der oberen Seite des Schrankunterteils angeordnet sind. Beim Zusammenbauen des Schaltpults wird das Pultteil mit seiner sich horizontal erstreckenden unteren Seite auf der sich horizontal erstreckenden oberen Seite des auf dem Boden stehenden Schrankunterteils derart aufgesetzt, dass die Schnappverbinder das Pultteil am Schrankteil in eingeschnapptem Zustand halten. Ein Herunterfallen des Pultteils vom Schrankteil wird dadurch wirkungsvoll vermieden. Auch wird keine weitere Person benötigt, die das Pultteil am Schrankunterteil festhält. Zudem gibt die Position der Schnappverbinder die Orientierung der Montageposition vor.

Um zum einen eine besonders stabile Schnappverbindung zwischen dem Pultteil und dem Schrankunterteil zu ermöglichen und zum anderen eine möglichst große Durchgangsöffnung zur Durchführung von elektrischen Einbauten oder Kabeln zwischen dem Pultteil und dem Schrankunterteil bereitzustellen, kann der Randbereich der oberen Seite des Schrankunterteils als ein um eine zentrale Durchgangsöffnung umlaufender Rahmen ausgebildet sein, an welchem die Schnappverbinder angreifen. Zusätzlich kann dementsprechend an der unteren Seite des Pultteils ein um eine zentrale Durchgangsöffnung umlaufender Rahmen ausgebildet sein, der mit dem Rahmen an der oberen Seite des Schrankunterteils in Anlage bringbar ist und an welchem die Schnappverbinder angreifen.

Gemäß einer besonders einfachen Ausgestaltung kann zumindest am Rahmen an der unteren Seite des Pultteils eine Mehrzahl von Ausbrüchen ausgebildet sein, in welche die am Rahmen an der oberen Seite des Schrankunterteils angebrachten korrespondierenden Schnappverbinder in Eingriff gebracht werden können.

Gemäß einer bevorzugten Ausführungsform der Erfindung können die Schnappverbinder als Doppelverbinder ausgebildet sein. Derartige Doppelverbinder dienen dazu, zwei Bauteile schnappend miteinander zu verbinden, wobei jeder Doppelverbinder einerseits in einen Ausbruch am einen Bauteil und anderseits in einen Ausbruch am anderen Bauteil einschnappt und somit beide Bauteile zueinander festlegt. Demgemäß kann am Rahmen an der unteren Seite des Pultteils und am Rahmen an der oberen Seite des Schrankunterteils eine Mehrzahl von korrespondierenden Ausbrüchen ausgebildet sein, in welche korrespondierende Doppelverbinder in Eingriff bringbar sind.

Um die Orientierung des Pultteils relativ zum Schrankunterteil in Montageposition zu definieren, kann zwischen der unteren Seite des Pultteils und der oberen Seite des Schrankunterteils eine Mehrzahl von Führungsstiften wirksam sein, die zumindest am Randbereich der oberen Seite des Schrankunterteils angeordnet sind.

Damit zusätzlich zu der Schnappverbindung, die während des Zusammenbauens des Schaltpults der Festlegung des Pultteils in der Montageposition dient, eine stabile Verbindung bei der Endmontage vorzusehen, können die Führungsstifte als Schraubbolzen ausgebildet sein. Dabei kann zumindest am Rahmen an der oberen Seite des Schrankunterteils eine Mehrzahl von Schraubbolzen angebracht sein, welche in am Rahmen an der unteren Seite des Pultteils angebrachte korrespondierende Durchgangsbohrungen einführbar und dort mittels Schraubenmuttern fixierbar ist.

Bereits durch zwei Schnappverbinder lässt sich eine stabile Festlegung des Pultteils in der Montageposition erreichen, wenn zumindest an zwei sich zueinander parallel erstreckenden Rahmenteilen eines Rahmens zumindest jeweils ein Schnappverbinder mittig angeordnet ist. Zusätzlich wird eine sichere Führung in die Montageposition dadurch erreicht, dass zumindest in den Eckbereichen des Rahmens an der oberen Seite des Schrankunterteils jeweils ein Führungsstift angeordnet ist.

Um den Innenraum des Schaltschrankunterteils und des Pultteils insbesondere gegen Staub und Feuchtigkeit abzudichten, kann zwischen dem Rahmen an der der oberen Seite des Schrankunterteils und dem Rahmen an der unteren Seite des Pultteils eine umlaufende Dichtung eingelegt werden.

Nachfolgend wird die Erfindung anhand einer bevorzugten Ausführungsform unter Bezugnahme auf die beigefügten Zeichnungen näher erläutert.

Es zeigen:
- Figur 1: in Seitendarstellung ein Schaltpult im montierten Zustand;
- Figur 2: die Rückansicht des in Figur 1 gezeigten Schaltpults;
- Figur 3: die Forderansicht des in den Figuren 1 und 2 gezeigten Schaltpults;
- Figur 4: in Seitendarstellung das in den Figuren 1 bis 3 gezeigte Schaltpult, wobei das Aufsatzteil im nicht montierten Zustand dargestellt ist;
- Figur 5: in perspektivischer Darstellung das in den Figuren 1 bis 4 gezeigte Schaltpult, wobei das Aufsatzteil weggelassen und das Pultteil im nicht montierten Zustand dargestellt ist;
- Figur 6: in perspektivischer Darstellung den bei der Montage des Pultteils auf dem Schrankunterteil verwendeten Doppelverbinder, wobei der Doppelverbinder einseitig in einen Ausbruch am Schrankunterteil eingeführt wird;
- Figur 7: in perspektivischer Darstellung den in Figur 6 gezeigten Doppelverbinder, wobei der Doppelverbinder auf einer Seite in einen Ausbruch am Schrankunterteil eingeschnappt ist und auf der anderen Seite in einen Ausbruch am Pultteil eingeführt wird; und
- Figur 8: in perspektivischer Darstellung den in den Figuren 6 und 7 gezeigten Doppelverbinder, wobei der Doppelverbinder beidseitig in je einen Ausbruch am Schrankunterteil und am Pultteil eingeschnappt ist.

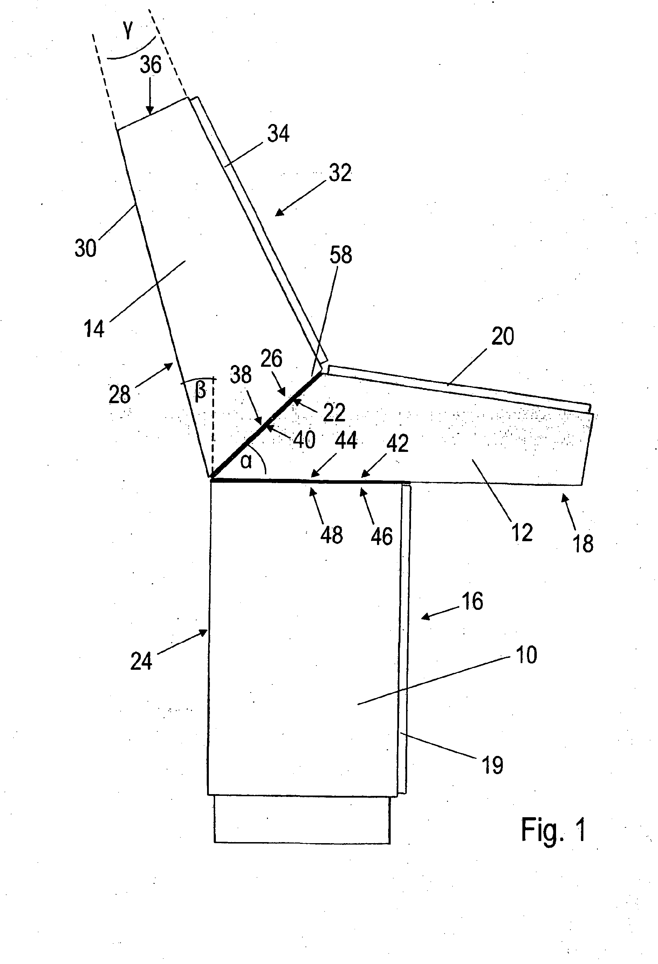

Die Fig. 1 zeigt in Seitendarstellung ein Schaltpult in montiertem Zustand. Das Schaltpult besteht aus einem Schrankunterteil 10, einem Pultteil 12 und einem Aufsatzteil 14, die im Wesentlichen aus Stahlblech aufgebaut sind. Das Pultteil 12 ist auf dem Schrankunterteil 10 aufgesetzt und steht über dessen Vorderseite 16 mit dem Teil 18 vor. Eine als Klappe ausgebildete Blende 20 verschließt die Oberseite des gegenüber dem Aufsatzteil 14 vorstehenden Teils 18 des Pultteils 12.

Das Aufsatzteil 14 ist an dem Pultteil 12 angeordnet. Dabei steht das Pultteil 12 an der Vorderseite 32 des Aufsatzteiles 14 vor, und die Vorderseite 32 des Aufsatzteiles 14 ist gegenüber der Vorderseite 16 des Schrankunterteils 10 zurückgesetzt.

Die Rückseite 22 des Pultteils 12 ist von der Rückseite 24 des Schrankunterteils 10 ausgehend in Richtung auf die Blende 20 des Pultteils 12 geneigt ausgebildet. Dabei ist die Rückseite 22 des Pultteils 12 im Winkel a von etwa 45° zur Horizontalen geneigt. Das Aufsatzteil 14 ist mit dessen unterer Seite 26 an der geneigten Rückseite 22 des Pultteils 12 angeordnet. Die Neigung der Rückseite 22 des Pultteils 12 entspricht der Neigung der zugekehrten unteren Seite 26 des Aufsatzteils 14.

Die Rückseite 28 des Aufsatzteils 14 ist mittels einer geneigten Rückwand 30 verschlossen, welche von der Rückseite 24 des Schrankunterteils 10 ausgeht und diese überragt. Die Rückseite 28 des Aufsatzteils 14 überragt die Rückseite 24 des Schrankunterteils 10 in einem Winkel β von etwa 15°.

Die Vorderseite 32 des Aufsatzteiles 14 ist leicht nach hinten geneigt und mittels einer als Klappe ausgebildeten geneigten Blende 34 verschlossen. Die Blende 34 geht von dem gegenüber dem Aufsatzteil 14 vorstehenden Teil 18 des Pultteils 12 aus und ist in Richtung auf die Rückseite 28 des Aufsatzteils 14 geneigt.

Die Vorderseite 32 des Aufsatzteils 14 und die Rückseite 28 des Aufsatzteils 14 sind in Richtung auf die obere Seite 36 des Aufsatzteils 14 zueinander geneigt. Die Vorderseite 32 des Aufsatzteils 14 und die Rückseite 28 des Aufsatzteils 14 sind in einem Winkel γ von etwa 10° zueinander geneigt.

Das Aufsatzteil 14 ist im wesentlich gleich dem Pultteil 12 geformt. Insbesondere sind die geschrägten Kontaktflächen an der geneigten Rückseite 22 des Pultteils 12 und der zugekehrten unteren Seite 26 des Aufsatzteils 14 gleich ausgebildet und weisen dieselbe Neigung auf.

An der unteren Seite 26 des Aufsatzteils 14 ist eine Durchgangsöffnung 38 ausgebildet. An der geneigten Rückseite 22 des Pultteils 12 ist eine korrespondierende Durchgangsöffnung 40 zur Durchführung von elektrischen Einbauten und/oder Kabeln ausgebildet. Die offene Durchgangsfläche der Durchgangsöffnungen 38 und 40 wird durch die Anlagefläche der geneigten Rückseite 22 des Pultteils 12 und der zugekehrten unteren Seite 26 des Aufsatzteils 14 definiert.

An der unteren Seite 42 des Pultteils 12 ist eine Durchgangsöffnung 44 und an der oberen Seite 46 des Schrankunterteils 10 ist eine korrespondierende Durchgangsöffnung 48 zur Durchführung von elektrischen Einbauten und/oder Kabeln ausgebildet.

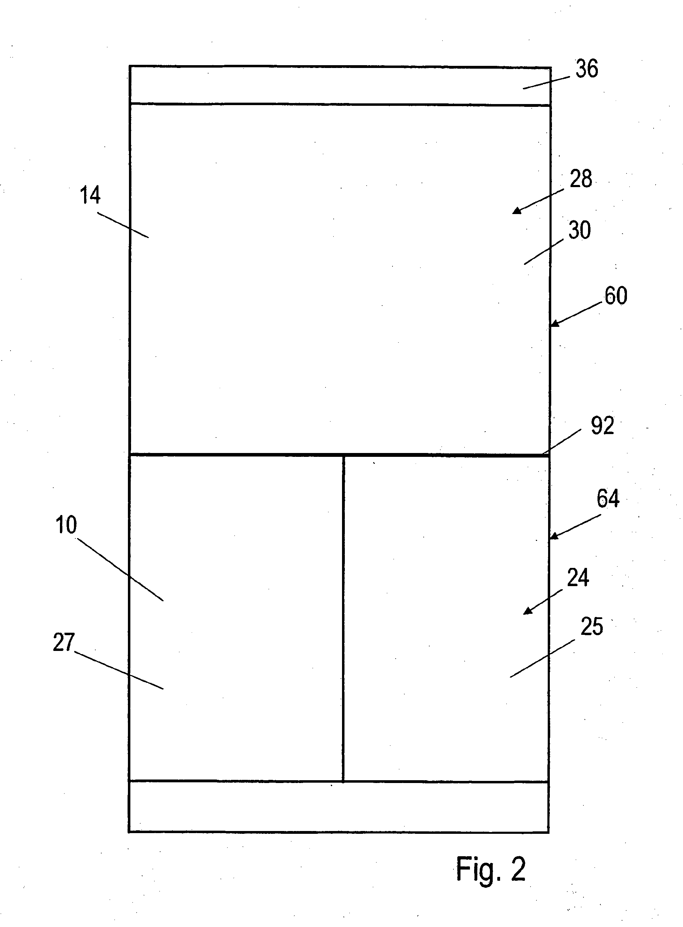

Die Figur 2 zeigt die Rückansicht des in Figur 1 gezeigten Schaltpults. In dieser Darstellung sind nur das Schrankunterteil 10 und darüber das Aufsatzteil 14 zu erkennen. Das Schrankunterteil 10 ist an seiner Rückseite 24 mit zwei angelenkten Türen 25 und 27 verschlossen. Die Rückseite 28 des Aufsatzteils 14 ist mit einer geschlossenen Rückwand 30 versehen. Die obere Seite 36 des Aufsatzteils 14 ist ebenfalls geschlossen ausgebildet.

Die Seitenwände 60 des Aufsatzteils 14 schließen bündig mit den Seitenwänden 62 des Pultteils 12 ab. Die Seitenwände 62 des Pultteils 12 schließen wiederum bündig mit den Seitenwänden 64 des Schrankunterteils 10 ab.

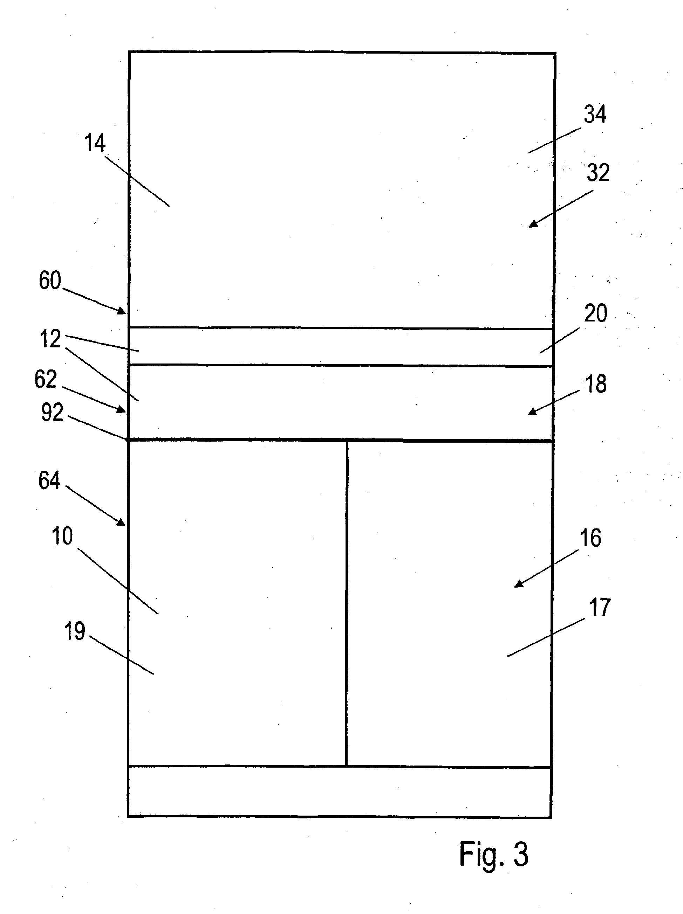

Die Figur 3 zeigt die Forderansicht des in den Figuren 1 und 2 gezeigten Schaltpults. In dieser Darstellung sind das Schrankunterteil 10, das darauf aufgesetzte Pultteil 12 und das darüber angeordnete Aufsatzteil 14 zu erkennen. Das Schrankunterteil 10 ist an der Vorderseite 16 mit zwei angelenkten Türen 17 und 19 verschlossen. Die als Klappe ausgebildete Blende 20 verschließt die Oberseite des gegenüber dem Aufsatzteil 14 vorstehenden Teils 18 des Pultteils 12. Die Vorderseite 32 des Aufsatzteils 14 ist mittels der als Klappe ausgebildeten Blende 34 verschlossen.

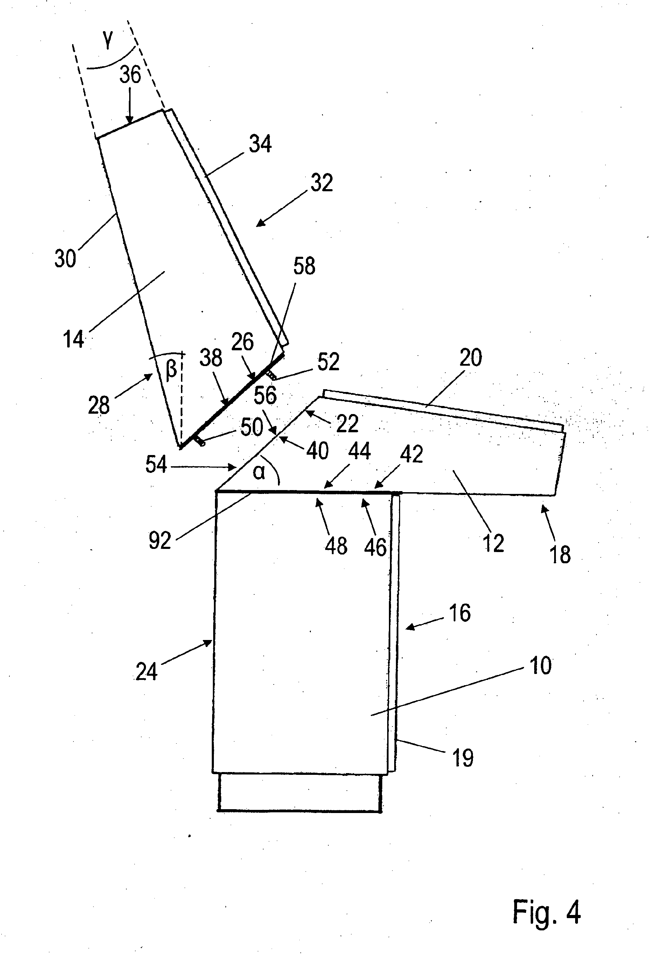

Die Figur 4 zeigt in Seitendarstellung das in den Figuren 1 bis 3 gezeigte Schaltpult, wobei das Aufsatzteil 14 im nicht montierten Zustand dargestellt ist. Zwischen der unteren Seite 26 des Aufsatzteils 14 und der geneigten Rückseite 22 des Pultteils 12 ist eine Mehrzahl von Schraubverbindungen wirksam, welche das Aufsatzteil 14 lösbar mit dem Pultteil 12 verbindet. Hierzu sind an der geneigten unteren Seite 26 des Aufsatzteils 14 eine Mehrzahl von Schraubbolzen angeschweißt, von denen in der Figur 4 nur die zwei Schraubbolzen 50 und 52 dargestellt sind. An der geneigten Rückseite 22 des Pultteils 12 sind zur Aufnahme der Schraubbolzen 50 und 56 korrespondierende Löcher angeordnet, von denen in der Figur 4 nur zwei Löcher mit den Bezugszeichen 54 und 56 gekennzeichnet sind.

Zwischen der unteren Seite 26 des Aufsatzteils 14 und der geneigten Rückseite 22 des Pultteils 12 ist eine Dichtung 58 angeordnet. Die Köpfe der an der unteren Seite 26 des Aufsatzteils 14 angeschweißten Schraubbolzen 50 und 52 weisen eine Höhe auf, die im Wesentlichen der Dicke der eingelegten Dichtung 58 entspricht. Hierdurch wird vermieden, dass die Dichtung 58 zwischen dem Aufsatzteil 14 und dem Pultteil 12 zerquetscht wird.

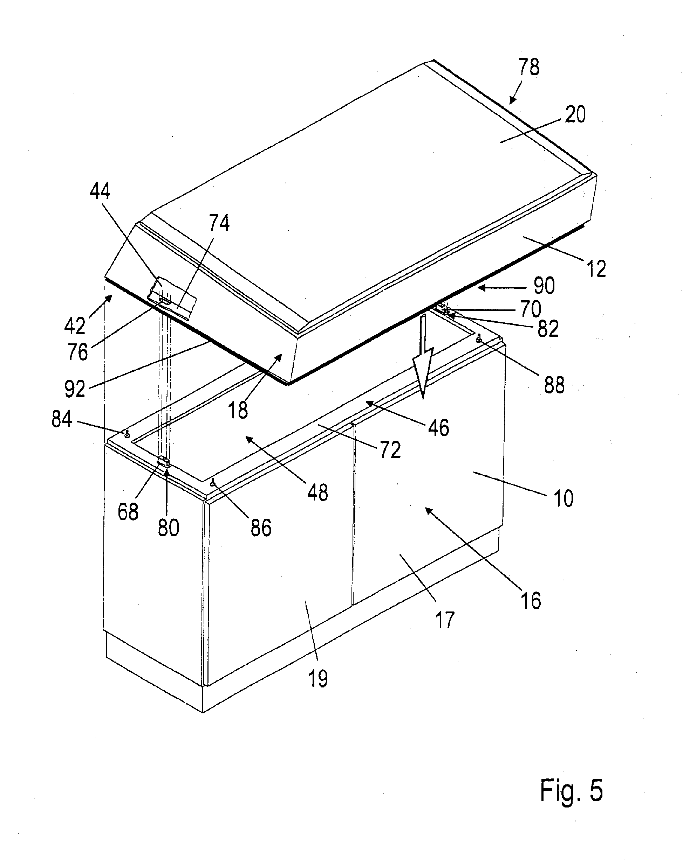

Die Figur 5 zeigt in perspektivischer Darstellung das in den Figuren 1 bis 4 gezeigte Schaltpult, wobei das Aufsatzteil weggelassen und das Pultteil 12 im nicht montierten Zustand dargestellt ist.

Der Randbereich der oberen Seite 46 des Schrankunterteils 10 ist als ein um eine zentrale Durchgangsöffnung 48 umlaufender Rahmen 72 ausgebildet. An der unteren Seite 42 des Pultteils 12 ist wiederum ein um eine zentrale Durchgangsöffnung 44 umlaufender Rahmen 74 ausgebildet.

Am Rahmen 74 an der unteren Seite 42 des Pultteils 12 ist an den zwei kurzen sich zueinander parallel erstreckenden Seiten des Pultteils 14 jeweils ein Ausbruch 76 und 78 mittig ausgebildet.

In diese Ausbrüche 76 und 78 greifen die am Rahmen 72 an der oberen Seite 46 des Schrankunterteils 10 angebrachten korrespondierenden Schnappverbinder 68 und 70 ein.

Die Schnappverbinder 68 und 70 sind als Doppelverbinder ausgebildet, die dazu dienen, zwei Bauteile schnappend miteinander zu verbinden, wobei jeder Doppelverbinder einerseits in einen Ausbruch am einen Bauteil und anderseits in einen Ausbruch am anderen Bauteil einschnappt und somit beide Bauteile zueinander festlegt.

Am Rahmen 72 an der oberen Seite 46 des Schrankunterteils 10 ist an den zwei kurzen sich zueinander parallel erstreckenden Seiten des Schrankunterteils 10 jeweils ein Ausbruch 80 und 82 mittig ausgebildet. Die Doppelverbinder 68 und 70 greifen einerseits in die Ausbrüche 80 und 82 an der oberen Seite 46 des Schrankunterteils 10 und andererseits in die Ausbrüche 76 und 78 der unteren Seite 42 des Pultteils 12 ein und legen das Pultteil 12 relativ zum Schrankunterteil 10 schnappend fest.

In den Eckbereichen des Rahmens 72 an der oberen Seite 46 des Schrankunterteils 10 ist jeweils ein Führungsstift 84, 86, 88 und 90 angeschweißt. Die Führungsstifte 84, 86, 88 und 90 sind als Schraubbolzen ausgebildet, welche in am Rahmen 74 an der unteren Seite 42 des Pultteils 12 angebrachte korrespondierende Durchgangsbohrungen einführbar und dort mittels Schraubenmuttern fixierbar sind.

Zwischen dem Rahmen 72 an der oberen Seite 46 des Schrankunterteils 10 und dem Rahmen 74 an der unteren Seite 42 des Pultteils 12 ist eine umlaufende Dichtung 92 angeordnet. Die Köpfe der am Rahmen 72 an der oberen Seite 46 des Schrankunterteils 10 angeschweißten Schraubbolzen 84, 86, 88 und 90 weisen eine Höhe auf, die im Wesentlichen der Dicke der Dichtung 92 entspricht.

Hierdurch wird vermieden, dass die Dichtung 92 zwischen dem Pulfteil 12 und dem Schrankunterteil 10 zerquetscht wird.

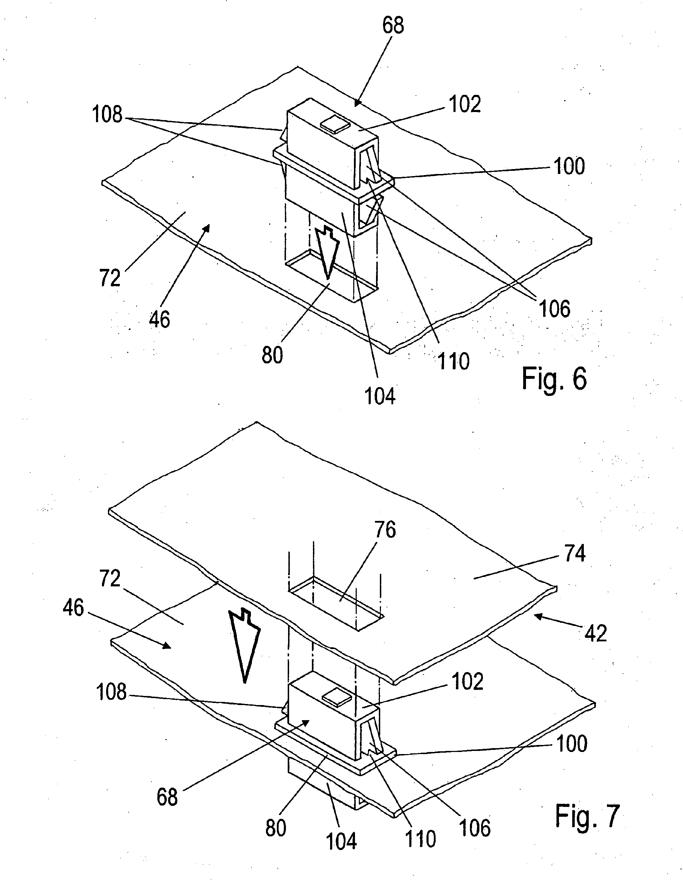

Die Figur 6 zeigt in perspektivischer Darstellung den bei der Montage des Pultteils 12 auf dem Schrankunterteil 10 verwendeten Doppelverbinder 68. In der Darstellung der Figur 6 ist die Situation dargestellt, in welcher der Doppelverbinder 68 einseitig in den Ausbruch 80 am Rahmen 72 an der oberen Seite 46 des Schrankunterteils 10 eingeführt wird.

Der Doppelverbinder 68 weist eine Grundplatte 100 auf, die eine größere Fläche als der Ausbruch 80 aufweist und somit im eingeführten Zustand des Doppelverbinders 68 über dessen Randbereich hinausragt. Beidseitig an der Grundplatte 100 sind zwei lang gestreckte, quaderförmige Verbinderkörper 102 und 104 angeordnet, die spiegelsymmetrisch zur Grundplatte 100 ausgebildet sind. Beispielsweise an den beiden kurzen Querseiten des Verbinderkörpers 104 sind jeweils federvorgespannte Anlaufschrägen 106 und 108 angeordnet. Beim Einführen des Verbinderkörpers 104 in den ebenfalls lang gestreckten rechteckigen Ausbruch 80 laufen die federvorgespannten Anlaufschrägen 106 und 108 an dessen Rand auf und werden in den Verbinderkörper 104 hineingedrückt. Am Ende jeder Auflaufschräge 106 und 108 ist nahe der Grundplatte 100 jeweils ein Rücksprung 110 ausgeformt, der bewirkt, dass bei vollständigem Einschieben des Verbinderkörpers 104 in den Ausbruch 80 die jeweilige Auflaufschräge 106 und 108 aus dem Verbinderkörper 104 herausschnappt. Dabei hintergreift der Rücksprung 110 an der anderen Seite des Ausbruchs 80 den Rahmen 72 an der oberen Seite 46 des Schrankunterteils 10. Der Rücksprung 110 weist einen Ausbruch aus, welche der Dicke des Rahmens 72 entspricht.

Die Figur 7 zeigt wiederum den bei der Montage des Pultteils 12 auf dem Schrankunterteil 10 verwendeten Doppelverbinder 68.

In der Darstellung der Figur 6 ist die Situation dargestellt, in welcher der Doppelverbinder 68 einerseits in den Ausbruch 80 am Rahmen 72 an der oberen Seite 46 des Schrankunterteils 10 eingeschnappt ist und andererseits in den Ausbruch 76 am Rahmen 74 an der unteren Seite 42 des Pultteils 12 eingeführt wird.

Das Anhand der Figur 6 hinsichtlich der Funktion und Wirkungsweise des Doppelverbinders 68 beim Einführen in die Ausbruch 80 am Rahmen 72 an der oberen Seite 46 des Schrankunterteils 10 Ausgeführte gilt sinngemäß auch für das Einführen in den Ausbruch 76 am Rahmen 74 an der unteren Seite 42 des Pultteils 12.

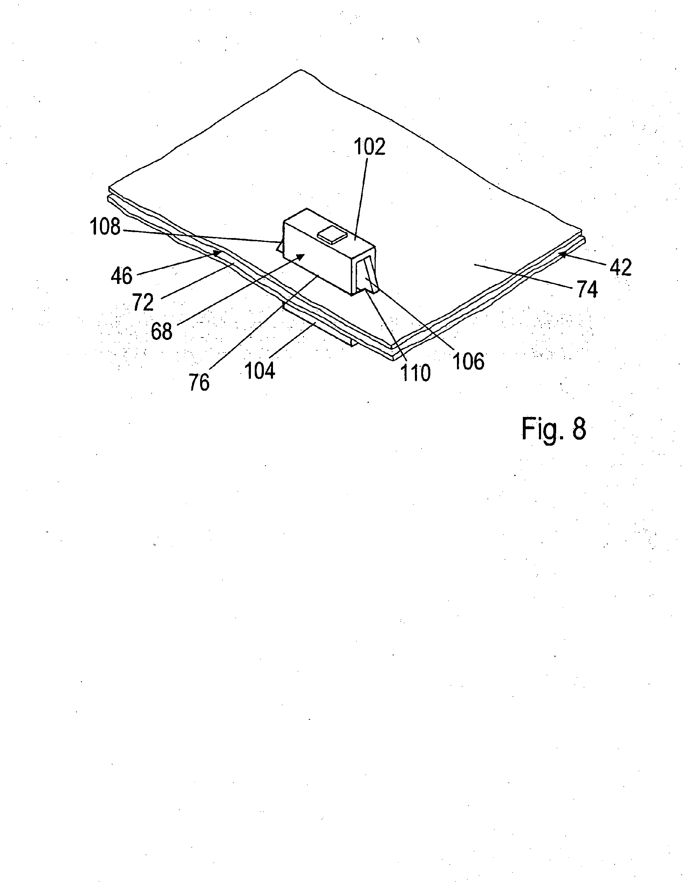

Die Figur 8 schließlich zeigt die Situation, in welcher der Doppelverbinder 68 einerseits in den Ausbruch 80 am Rahmen 72 an der oberen Seite 46 des Schrankunterteils 10 und andererseits in den Ausbruch 76 am Rahmen 74 an der unteren Seite 42 des Pultteils 12 eingeschnappt ist und die beiden Rahmen 72 und 74 zueinander festgelegt sind. Der Abstand zwischen den beiden Rahmen 72 und 74 ist durch die Dicke der Grundplatte 100 des Doppelverbinders 68 festgelegt.

Die Grundplatte 100 hat eine Dicke, die im Wesentlichen der Dicke der (in der Figur 8 nicht dargestellten) umlaufenden Dichtung 92 entspricht, und dient somit dazu, dass die eingelegte Dichtung 92 nicht zwischen dem Pultteil 12 und dem Schrankunterteil 10 zerquetscht wird.

## Patentansprüche

1. Schaltpult mit einem Schrankunterteil (10), einem Pultteil (12) und einem Aufsatzteil (14), wobei das Pultteil (12) auf dem Schrankunterteil (10) angeordnet ist und über dessen Vorderseite (16) vorsteht, wobei das Aufsatzteil (14) an dem Pultteil (12) angeordnet ist und wobei der gegenüber dem Aufsatzteil (14) vorstehende Teil (18) des Pultteils (12) mittels einer Blende (20) verschließbar ist, und
dass zwischen der unteren Seite (42) des Pultteils (12) und der oberen Seite (46) des Schrankunterteils (10) eine Mehrzahl von Schnappverbindern (68, 70) wirksam ist, die zumindest am Randbereich der oberen Seite (46) des Schrankunterteils (10) angeordnet sind,
**dadurch gekennzeichnet, dass** zwischen der unteren Seite (42) des Pultteils (12 und der oberen Seite (46) des Schrankunterteils (10) eine Mehrzahl von Führungsstiften (84, 86, 88, 90) wirksam ist, die zumindest am Randbereich der oberen Seite (46) des Schrankunterteils (10) angeordnet sind.

2. Schaltpult nach Anspruch 1,
**dadurch gekennzeichnet,**
**dass** der Randbereich der oberen Seite (46) des Schrankunterteils (10) als ein um eine zentrale Durchgangsöffnung (48) umlaufender Rahmen (72) ausgebildet ist, an welchem die Schnappverbinder (68, 70) angreifen.

3. Schaltpult nach Anspruch 2,
**dadurch gekennzeichnet,**
**dass** an der unteren Seite (42) des Pultteils (12) ein um eine zentrale Durchgangsöffnung (44) umlaufender Rahmen (74) ausgebildet ist, der mit dem Rahmen (72) an der oberen Seite (46) des Schrankunterteils (10) in Anlage bringbar ist und an welchem die Schnappverbinder (68, 70) angreifen.

4. Schaltpult nach Anspruch 3;
**dadurch gekennzeichnet,**
**dass** zumindest am Rahmen (74) an der unteren Seite (42) des Pultteils (12) eine Mehrzahl von Ausbrüchen (76, 78) ausgebildet sind, in welche die am Rahmen (72) an der oberen Seite (46) des Schrankunterteils (10) angebrachten korrespondierenden Schnappverbinder (68, 70) in Eingriff bringbar sind.

5. Schaltpult nach Anspruch 3 oder 4,
**dadurch gekennzeichnet,**
**dass** die Schnappverbinder (68, 70) als Doppelverbinder (Figuren 6 bis 8) ausgebildet sind, und
**dass** am Rahmen (74) an der unteren Seite (42) des Pultteils (12) und am Rahmen (72) an der oberen Seite (46) des Schrankunterteils (10) eine Mehrzahl von korrespondierenden Ausbrüchen (76, 78; 80, 82) ausgebildet sind, in welche korrespondierende Doppelverbinder (68, 70) in Eingriff bringbar sind.

6. Schaltpult nach einem der Ansprüche 1 bis 5,
**dadurch gekennzeichnet,**
**dass** die Führungsstifte (84, 86, 88, 90) als Schraubbolzen ausgebildet sind, und
**dass** zumindest am Rahmen (72) an der oberen Seite (46) des Schrankunterteils (10) eine Mehrzahl von Schraubbolzen (84, 86, 88, 90) angebracht sind, welche in am Rahmen (74) an der unteren Seite (42) des Pultteils (12) angebrachte korrespondierende Durchgangsbohrungen einführbar und dort mittels Schraubenmuttern fixierbar sind.

7. Schaltpult nach einem der Ansprüche 2 bis 6,
**dadurch gekennzeichnet,**
**dass** zumindest an zwei sich zueinander parallel erstreckenden Rahmenteilen eines Rahmens (72, 74) zumindest ein Schnappverbinder (68, 70) mittig angeordnet ist.

8. Schaltpult nach einem der Ansprüche 2 bis 7,
**dadurch gekennzeichnet,**
**dass** zumindest in den Eckbereichen des Rahmens (72) an der oberen Seite (46) des Schrankunterteils (10) jeweils ein Führungsstift (84, 86, 88, 90) angeordnet ist.

9. Schaltpult nach einem der Ansprüche 1 bis 8,
**dadurch gekennzeichnet,**
**dass** zwischen dem Rahmen (72) an der oberen Seite (46) des Schrankunterteils (10) und dem Rahmen (74) an der unteren Seite (42) des Pultteils (12) eine umlaufende Dichtung (92) angeordnet ist.

## Claims

1. A control desk comprising a cabinet base (10), a desk part (12) and a top part (14), wherein the desk part (12) is arranged on a the cabinet base (10) and projects over the front side (16) thereof, wherein the top part (14) is arranged on the desk part (12), and wherein the part (18) of the desk part (12) projecting opposite the top part (14) is closable by means of a cover (20), and that a plurality of snap connectors (68, 70) is operative between the lower side (42) of the desk part (12) and the upper side (46) of the cabinet base (10), the snap connectors being arranged at least in the edge section of the upper side (46) of the cabinet base (10), **characterized in that** a plurality of guide pins (84, 86, 88, 90) is operative between the lower side (42) of the desk part (12) and the upper side (46) of the cabinet base (10), the guide pins being arranged at least in the edge section of the upper side (46) of the cabinet base (10).

2. The control desk according to Claim 1,
**characterized in that** the edge section of the upper side (46) of the cabinet base (10) is designed as a frame (72) surrounding a central through opening (48), on which the snap connectors (68, 70) engage.

3. The control desk according to Claim 2,
**characterized in that** a frame (74) surrounding a central through hole (44) is designed on the lower side (42) of the desk part (12), which may be brought into abutment with the frame (72) on the upper side (46) of the cabinet base (10), and on which the snap connectors (68, 70) engage.

4. The control desk according to Claim 3,
**characterized in that** a plurality of break-throughs (76, 78) is formed on the frame (74) on the lower side (42) of the desk part (12), in which the corresponding snap connectors (68, 70) mounted on the frame (72) on the upper side (46) of the cabinet base (10) may be brought into engagement.

5. The control desk according to Claim 3 or 4,
**characterized in that** the snap connectors (68, 70) are designed as double connectors (Figures 6 through 8), and
that a plurality of corresponding break-throughs (76, 78, 80, 82) is designed on the frame (74) on the lower side (42) of the desk part (12) and on the frame (72) on the upper side (46) of the cabinet base (10), into which break-throughs corresponding double connectors (68, 70) may be brought into engagement.

6. The control desk according to one of Claims 1 through 5,
**characterized in that** the guide pins (84, 86, 88, 90) are designed as threaded bolts,
and that a plurality of threaded bolts (84 86, 88, 90) is mounted at least on the frame (72) on the upper side (46) of the cabinet base (10), which may be introduced into corresponding through holes on the frame (74) on the lower side (42) of the desk part (12) and fixed there by means of threaded nuts.

7. The control desk according to one of Claims 2 through 6,
**characterized in that** at least one snap connector (68, 70) is centrally arranged at least on two frame sections of a frame (72, 74) extending parallel to one another.

8. The control desk according to one of Claims 2 through 7,
**characterized in that** one guide pin each (84, 86, 88, 90) is arranged at least in the corner areas of the frame (72) on the upper side (46) of the cabinet base (10).

9. The control desk according to one of Claims 1 through 8,
**characterized in that** a circumferential seal (92) is arranged between the frame (72) on the upper side (46) of the cabinet base (10) and the frame (74) on the lower side (42) of the desk part (12).

## Revendications

1. Pupitre de commande, comportant une partie inférieure formant armoire (10), une partie formant console (12) et une partie surélevée (14), la partie formant console (12) étant disposée sur la partie inférieure formant armoire (10) et étant en saillie sur la face avant (16) de celle-ci, la partie surélevée (14) étant disposée sur la partie formant console (12) et la partie (18) de la partie formant console (12), saillante par rapport à la partie surélevée (14), pouvant être fermée par un cache (20), et
entre la face inférieure (42) de la partie formant console (12) et la face supérieure (46) de la partie inférieure formant armoire (10) agissent une pluralité d'attaches encliquetables (68, 70), qui sont disposées au moins dans la zone de bordure de la face supérieure (46) de la partie inférieure formant armoire (10),
**caractérisé en ce que**
entre la face inférieure (42) de la partie formant console (12) et la face supérieure (46) de la partie inférieure formant armoire (10) agissent une pluralité de pointes de guidage (84, 86, 88, 90) qui sont disposées au moins dans la zone de bordure de la face supérieure (46) de la partie inférieure formant armoire (10).

2. Pupitre de commande selon la revendication 1, **caractérisé en ce que** la zone de bordure de la face supérieure (46) de la partie inférieure formant armoire (10) est réalisée sous la forme d'un cadre (72), qui entoure une ouverture de passage (48) centrale et sur lequel s'agrippent les attaches encliquetables (68, 70).

3. Pupitre de commande selon la revendication 2, **caractérisé en ce que** sur la face inférieure (42) de la partie formant console (12) est réalisé un cadre (74), qui entoure une ouverture de passage (44) centrale et qui peut être amené en appui sur la face supérieure (46) de la partie inférieure formant armoire (10) et sur lequel s'agrippent les attaches encliquetables (68, 70).

4. Pupitre de commande selon la revendication 3, **caractérisé en ce qu'**au moins sur le cadre (74) sur la face inférieure (42) de la partie formant console (12) sont réalisés une pluralité de creux (76, 78), dans lesquels peuvent entrer en prise les attaches encliquetables (68, 70) correspondantes fixées au cadre (72) sur la face supérieure (46) de la partie inférieure formant armoire (10).

5. Pupitre de commande selon la revendication 3 ou 4, **caractérisé en ce que** les attaches encliquetables (68, 70) sont réalisées sous la forme d'attaches doubles (figures 6 à 8) et **en ce que** sur le cadre (74) sur la face inférieure (42) de la partie formant console (12) et sur le cadre (72) sur la face supérieure (46) de la partie inférieure formant armoire (10) sont réalisés une pluralité de creux (76, 78 ; 80, 82) correspondants, dans lesquels peuvent entrer en prise les attaches doubles (68, 70) correspondantes.

6. Pupitre de commande selon l'une quelconque des revendications 1 à 5, **caractérisé en ce que** les pointes de guidage (84, 86, 88, 90) sont réalisées sous la forme de boulons filetés et **en ce qu'**au moins sur le cadre (72) sur la face supérieure (46) de la partie inférieure formant armoire (10) sont attachés une pluralité de boulons filetés (84, 86, 88, 90), qui peuvent être introduits dans des forures débouchantes correspondantes, réalisées sur le cadre (74) sur la face inférieure (42) de la partie formant console (12), et peuvent y être fixés par des écrous filetés.

7. Pupitre de commande selon l'une quelconque des revendications 2 à 6, **caractérisé en ce qu'**au moins une attache encliquetable (68, 70) est disposée au centre sur au moins deux parties, parallèles entre elles, d'un cadre (72, 74).

8. Pupitre de commande selon l'une quelconque des revendications 2 à 7, **caractérisé en ce que** respectivement une pointe de guidage (84, 86, 88, 90) est disposée au moins dans les zones d'angle du cadre (72) sur la face supérieure (46) de la partie inférieure formant armoire (10).

9. Pupitre de commande selon l'une quelconque des revendications 1 à 8, **caractérisé en ce qu'**une garniture d'étanchéité (92) périphérique est disposée entre le cadre (72) sur la face supérieure (46) de la partie inférieure formant armoire (10) et le cadre (74) sur la face inférieure (42) de la partie formant console (12).
